# EUROPEAN PATENT APPLICATION

(11) **EP 2 236 549 A1**
(43) Date of publication of application: **06.10.2010**
(21) Application number: 10157438.2
(22) Date of filing: 23.03.2010
(51) Int. Cl.: C08J 5/24, C08L 63/00

(54) **Cured composite composition**

(30) Priority: 31.03.2009 US 414707
(71) Applicant: General Electric Company, Schenectady, NY 12345 (US)
(72) Inventor: Fang, Xiaomei, Niskayuna, NY 12309 (US); Lin, Wendy Wen-Ling, Niskayuna, NY 12309 (US); Bansal, Amitabh, Rhinebeck, NY 12572 (US); Yoon, Yosang, Green Island, NY 12183 (US)
(74) Representative: Szary, Anne Catherine

(57) **Abstract**

In one aspect, the present invention provides a cured composite composition comprising (a) a fiber component; and (b) an organic composition. The organic composition comprises a cured epoxy continuous phase and a nanoparticulate thermoplastic block copolymeric discontinuous phase. The nanoparticulate thermoplastic block copolymeric discontinuous phase has a domain size distribution in a range from about 1 nanometer to about 500 nanometers, and the discontinuous phase is substantially uniformly distributed throughout the cured composite composition. Articles and method of making the cured composite compositions are also provided.

## Description

### BACKGROUND

The invention relates to a cured composite composition. Further, the invention relates to reinforced composite compositions made employing vacuum assisted resin transfer methods.

Fiber reinforced composite materials are typically lightweight but high strength materials displaying excellent rigidity, shock resistance, fatigue resistance and other desirable mechanical properties. Frequently, such fiber reinforced composite materials display excellent corrosion resistance as well. Fiber reinforced composite materials are used in a wide variety of applications including aircraft, spacecraft, automobiles, railroad vehicles, ships, construction materials, sporting goods, and other applications in commerce and technology in which a combination of high strength and light weight is desirable.

Fiber reinforced composite materials may be produced from prepregs comprising a fiber component and an uncured thermosetting resin component. Typically, the prepreg in the form of a sheet is layered into a mold and then thermally cured. This process, however, is labor intensive and as a result is frequently higher in cost than other manufacturing techniques.

In certain applications, fiber reinforced composite materials are deficient in one or more physical properties and enhancements are required. For example, enhanced impact resistance may be required in applications such as aircraft wing structures in order to achieve the high level of resistance required to avoid part failure as a result of foreign-object impact during flight, and damage resulting from ground-maintenance activities (e.g. from tool drop, forklift contact), and the like. Also, because impact damage in composite materials is generally not visible to the naked eye, it is important for primary load-bearing structures to be able to carry their full design load after impact and prior to detection using non-destructive techniques.

Recently, resin transfer molding processes have become widely used to prepare fiber reinforced composite materials. In a resin transfer molding process a fiber structure (sometimes referred to as a "preform") is infused with a resin material under an applied vacuum. To help achieve an even distribution of the resin throughout the preform and a desired thickness of the finished composite structure, some resin transfer molding processes, such as controlled atmospheric pressure resin infusion, utilize a partial vacuum, while others, such as double bag vacuum infusion (DBVI), incorporate multiple vacuum bags. However, due to excess resin infused into the preform, known resin transfer molding processes typically produce finished composite structures that are consistently resin rich, have a high per ply thickness, and have a low fiber volume as compared to traditional autoclave-cured composite structures. In addition, resin transfer molding processes typically require that the resin component be characterized by a relatively low injection viscosity in order to allow complete wetting and impregnation of the preform by the resin component.

Despite the impressive progress made to date in this area, further improvements are needed to in order to provide fiber reinforced composite materials displaying the physical properties and performance enhancements required by more demanding applications. In addition there is a need to identify uncured materials systems which are readily and efficiently transformed into fiber reinforced composite materials using resin transfer molding processes. Thus, in one aspect uncured compositions are needed which display low enough viscosity for efficient use under resin transfer molding conditions, but which upon curing provide fiber reinforced composite materials displaying excellent toughness and other properties. The present invention provides additional solutions to these and other challenges associated with composite compositions.

### BRIEF DESCRIPTION

In one aspect, the present invention provides a cured composite composition comprising (a) a fiber component; and (b) an organic composition comprising a cured epoxy continuous phase and a nanoparticulate thermoplastic block copolymeric discontinuous phase; said nanoparticulate thermoplastic block copolymeric discontinuous phase having a domain size distribution in a range from about 1 nanometer to about 500 nanometers, said discontinuous phase is substantially uniformly distributed throughout the cured composite composition.

In another aspect, the present invention provides a method of preparing a cured composite article comprising (a) contacting a fiber structure with a formulation comprising an uncured epoxy resin and a thermoplastic block copolymer, said thermoplastic block copolymer being substantially soluble in said uncured epoxy resin and substantially insoluble in a corresponding cured epoxy resin to provide an uncured intermediate, said contacting being carried out under vacuum assisted resin transfer method conditions; and (b) curing the uncured intermediate to provide a cured composite article comprising a cured epoxy continuous phase and a nanoparticulate thermoplastic block copolymeric discontinuous phase; said nanoparticulate thermoplastic block copolymeric discontinuous phase having a domain size distribution in a range from about 1 nanometer to about 500 nanometers, said discontinuous phase being substantially uniformly distributed throughout the cured composite composition.

In yet another aspect, the present invention provides an uncured composite composition comprising (a) a fiber component; and (b) a formulation comprising an uncured epoxy resin and a thermoplastic block copolymer selected from the group consisting of diblock copolymers of polymethylmethacrylate and polybutylacrylate and triblock copolymers of polystyrene, polybutylacrylate, and polymethylmethacrylate; wherein said thermoplastic block copolymer is substantially soluble in the epoxy resin in the uncured state and substantially insoluble in a corresponding cured epoxy resin.

In another aspect, the present invention provides a cured composite composition comprising: (a) a carbon fiber component and (b) an organic composition comprising a cured epoxy continuous phase and a nanoparticulate thermoplastic diblock copolymeric discontinuous phase; said nanoparticulate thermoplastic diblock copolymeric discontinuous phase has a domain size distribution in a range from about 1 nanometer to about 500 nanometers, said discontinuous phase being substantially uniformly distributed throughout the cured composite composition.

These and other features, aspects, and advantages of the present invention may be understood more readily by reference to the following detailed description.

### DETAILED DESCRIPTION

In the following specification and the claims, which follow, reference will be made to a number of terms, which shall be defined to have the following meanings.

The singular forms "a", "an" and "the" include plural referents unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", and "substantially" is not to be limited to the precise value specified. In some instances, the approximating language may correspond to the precision of an instrument for measuring the value. Similarly, "free" may be used in combination with a term, and may include an insubstantial number, or trace amounts, while still being considered free of the modified term. Here and throughout the specification and claims, range limitations may be combined and/or interchanged, such ranges are identified and include all the sub-ranges contained therein unless context or language indicates otherwise.

As noted, in one embodiment the present invention provides a cured composite composition comprising (a) a fiber component; and (b) an organic composition comprising a cured epoxy continuous phase and a nanoparticulate thermoplastic block copolymeric discontinuous phase, wherein the discontinuous phase is substantially uniformly distributed throughout the cured composite composition.

In one embodiment, the fiber component can include woven or felted fibers. Non-limiting examples of the fiber component include carbon fibers, graphite fibers, glass fibers, quartz fiber, mineral fibers, polymer fibers such as for example aramid fibers, ultra high molecular weight polyethylene, extended chain polyethylene polybenzimidazole, and the like. In one embodiment, the fiber component is a continuous fiber. In another embodiment, the fiber component is non-continuous. In one embodiment, the fiber can be a fabric, a braid, or a mat. In another embodiment, the fiber component can include one or more layers of the woven or felted fibers.

In one embodiment, the fiber component is a non-woven fiber of continuous fibers. Examples of the non-woven fibers include but not limited to spunbonding, spunlacing, or fabric mesh. Spunbonded fibers are produced from continuous fibers that are continuously spun and bonded thermally. Spunlaced fibers are prepared from continuous fibers that are continuously spun and bonded mechanically. In one embodiment, the fiber is a non-woven mesh fiber. The dimensions of the fiber component may be varied according to the particular application targeted for the cured composite composition. Typically, the fibers making up the fiber component have a diameter in a range from about 1 to about to about 100 microns.

As noted, the cured composite compositions provided by the present invention comprise a fiber component and an organic composition component, the organic composition comprising a cured epoxy continuous phase and a nanoparticulate thermoplastic block copolymeric discontinuous phase. In one embodiment, the cured composite composition includes structural units derived from a formulation comprising an uncured epoxy resin a thermoplastic block copolymer. Typically, the uncured epoxy resin comprises a reactive monomer having a plurality of epoxy groups. Uncured epoxy resins may be converted to a thermoset upon curing. In one embodiment, the uncured epoxy resin comprises at least one monomer having two epoxy groups, the epoxy resin being converted to a cured epoxy resin upon treatment with a curing agent.

Suitable uncured epoxy resins are exemplified by epoxy resins comprising one or more of the following components: polyhydric phenol polyether alcohols, glycidyl ethers of novolac resins such as epoxylated phenol-formaldehyde novolac resin, glycidyl ethers of mononuclear di-and trihydric phenols, glycidyl ethers of bisphenols such as the diglycidyl ether of tetrabromobisphenol A, glycidyl ethers of polynuclear phenols, glycidyl ethers of aliphatic polyols, glycidyl esters such as aliphatic diacid diglycidyl esters, glycidyl epoxies containing nitrogen such as glycidyl amides and amide-containing epoxies, glycidyl derivatives of cyanuric acid, glycidyl resins from melamines, glycidyl amines such as triglycidyl ether amine of p-aminophenol, glycidyl triazines, thioglycidyl ethers, silicon-containing glycidyl ethers, monoepoxy alcohols, glycidyl aldehyde, 2, 2'-diallyl bisphenol A diglycidyl ether, butadiene dioxide, and bis(2,3-epoxycyclopentyl)ether.

Additional epoxy resins which may be employed in the practice of the invention may comprise one or more of the following components: octadecylene oxide, epichlorohydrin, styrene oxide, vinylcyclohexene oxide, glycidyl methacrylate, the diglycidyl ether of Bisphenol A (for example, those available under the trade designations "EPON 828," "EPON 1004," and "EPON 1001 F" from Shell Chemical Co., Houston, Tex., and "DER-332" and "DER-334", from Dow Chemical Co., Midland, Mich.), the diglycidyl ether of Bisphenol F (for example, those under the trade designations "ARALDITE GY281" from Ciba-Geigy Corp., Hawthorne, N.Y., and "EPON 862" from Shell Chemical Co.), vinylcyclohexene dioxide (for example the product designated "ERL 4206" from Union Carbide Corp., Danbury, Conn.), 3,4-epoxycyclohexyl-methyl-3,4-epoxycyclohexene carboxylate (for example the product designated "ERL-4221" from Union Carbide Corp.), 2-(3,4-epoxycyclohexyl-5,5-spiro-3,4-epoxy) cyclohexane-metadioxane (for example the product designated "ERL-4234" from Union Carbide Corp.), bis(3,4-epoxycyclohexyl) adipate (for example the product designated "ERL-4299" from Union Carbide Corp.), dipentene dioxide (for example the product designated "ERL-4269" from Union Carbide Corp.), epoxidized polybutadiene (for example the product designated "OXIRON 2001" from FMC Corp.), epoxy silanes for example, beta-3,4-epoxycyclohexylethyltrimethoxysilane and gamma-glycidyloxypropyltrimethoxysilane, 1,4-butanediol diglycidyl ether (for example the product designated "ARALDITE RD-2" from Ciba-Geigy Corp.), hydrogenated bisphenol A diglycidyl ether (for example the product designated "EPONEX 1510" from Shell Chemical Co.), and polyglycidyl ethers of phenol-formaldehyde novolaks (for example the products designated "DEN-431" and "DEN-438" from Dow Chemical Co.). Additional, non-limiting examples of suitable epoxy resins include the toughened epoxy resin, "Cycom 977-2" and epoxy resins "Cycom 977-20", "Cycom PR520" and "Cycom 5208" available commercially from Cytec Engineered Materials Inc., (Tempe, Arizona); "HexFLow RTM-6", "HexFlow VRM 34", a two-part, amine-cured epoxy system from Hexcel (Dublin, CA), and "LX70412.0" available from Henkel-Loctite (BayPoint, CA).

As noted, the cured composite composition includes structural units derived from a formulation comprising an uncured epoxy resin and a thermoplastic block copolymer (the uncured formulation). In one embodiment, the uncured epoxy resin is present in the formulation in an amount corresponding to from about 60 weight percent to about 98 weight percent based upon a total weight of the formulation. In another embodiment, the uncured epoxy resin is present in the formulation in an amount corresponding to from about 80 weight percent to about 98 weight percent based upon a total weight of the formulation. In yet another embodiment, the uncured epoxy resin is present in the formulation in an amount corresponding to from about 85 weight percent to about 95 weight percent based upon a total weight of the formulation.

As noted, in one embodiment, the cured composite composition comprises an organic composition comprising a cured epoxy continuous phase and a nanoparticulate discontinuous phase comprising a thermoplastic block copolymer. In one embodiment, the thermoplastic block copolymer is a diblock copolymer. In another embodiment, the thermoplastic block copolymer is a triblock copolymer. Non-limiting examples of thermoplastic block copolymers include polyolefin block copolymers, polyesters block copolymers, arylate ester block copolymers, polyamides, polysulfone block copolymers, polyimide block copolymers, polyetherimide block copolymers, polyether sulfone block copolymers, polyphenylene sulfide block copolymers, polyether ketone block copolymers, polyether ether ketone block copolymers, polystyrene block copolymers (for example block copolymers comprising hydrogenated polystyrene blocks, and block copolymers comprising atactic polystyrene blocks), polyacrylate block copolymers polymethylmethacrylate block copolymers, polyacrylonitrile block copolymers, polyacetal block copolymers, polycarbonate block copolymers, polyphenylene ether block copolymers, ethylene-vinyl acetate block copolymers, and polyvinyl acetate block copolymers.

In one embodiment, the thermoplastic block copolymer is a block copolymer comprising two polymethylmethacrylate blocks and a polybutylarcylate block (PMMA-PBA-PMMA). In another embodiment, the thermoplastic block copolymer comprises a polystyrene block, a polybutylacrylate block and a polymethylmethacrylate block and may be represented as PS-PBA-PMMA.

In one embodiment, the thermoplastic block copolymer has a weight average molecular weight of at least about 82 k Dalton. In another embodiment, the thermoplastic block copolymer has a weight average molecular weight in a range from about 82 k Dalton to about 160 k Daltons.

As noted, the cured composite composition provided by the present invention comprises a fiber component and an organic composition comprising a cured epoxy continuous phase and a nanoparticulate thermoplastic block copolymeric discontinuous phase. The organic composition may be prepared from a formulation comprising an uncured epoxy resin a thermoplastic block copolymer. In one embodiment, the thermoplastic block copolymer is present in an amount corresponding to from about 2 weight percent to about 40 weight percent based upon a total weight of the formulation. In another embodiment, the thermoplastic block copolymer is present in an amount corresponding to from about 2 weight percent to about 25 weight percent based upon a total weight of the formulation. In yet another embodiment, the thermoplastic block copolymer is present in an amount corresponding to from about 5 weight percent to about 15 weight percent based upon a total weight of the formulation.

In various embodiments, the thermoplastic block copolymer is substantially soluble in the uncured epoxy resin and substantially insoluble in a corresponding cured epoxy resin in the composite composition. In various embodiments, the present invention provides a cured composite composition comprising a nanoparticulate thermoplastic block copolymeric phase, which is substantially uniformly distributed throughout the cured composite composition. In one embodiment, the nanoparticulate thermoplastic block copolymeric discontinuous phase has a domain size distribution in a range from about 1 nanometer to about 1 micron. In another embodiment, the nanoparticulate thermoplastic block copolymeric discontinuous phase has a domain size distribution in a range from about 1 nanometer to about 500 nanometers. In yet another embodiment, the nanoparticulate thermoplastic block copolymeric discontinuous phase has a domain size distribution in a range from about 1 nanometer to about 250 nanometers. In yet still another embodiment, the nanoparticulate thermoplastic block copolymeric discontinuous phase has a domain size distribution in a range from about 1 nanometer to about 100 nanometers. In one embodiment, the discontinuous phase can take the form of agglomerates of smaller nanoparticles. In another embodiment, the agglomerates of smaller nanoparticles can have a domain size in a range from about 10 nanometers to about 500 micron.

As noted the cured composite composition provided by the present invention may be prepared by the infusion into a fiber component of a formulation comprising an uncured epoxy resin and a thermoplastic block copolymer which is soluble in the uncured epoxy resin. In one aspect, the present invention provides such formulations which are especially suitable for use in the preparation of cured composite compositions owing to the relatively low viscosities of such formulations. In one embodiment, the formulation used to prepare the cured composite composition has especially good viscosity characteristics for completely and uniformly contacting the fiber component in a process at times referred to herein as resin infusion. In one embodiment, the resin infusion is carried out using the vacuum assisted resin transfer method (hereinafter also known as "VARTM"). In one embodiment, formulation comprising the uncured epoxy and the thermoplastic block copolymer has a viscosity in a range from about 20 centiPoise to about 1200 centiPoise at the temperature at which the infusion step is to be carried out (the infusion temperature). In another embodiment, the formulation has a viscosity in a range from about 20 centiPoise to about 600 centiPoise at the infusion temperature. Typically the infusion temperature is in a range from about ambient temperature to about 100°C, although lower infusion temperatures and higher infusion temperatures may also be used.

In one embodiment, the present invention employs a formulation comprising the uncured epoxy resin and the thermoplastic block copolymer having a the gel time appropriate to provide complete contact with the fiber component even in the case of an intricately shaped article comprising the cured composite composition.

The organic composition comprising the cured epoxy continuous phase and the nanoparticulate thermoplastic block copolymeric discontinuous phase is in certain embodiments characterized by an observable glass transition of either or both of the continuous and discontinuous phases. In one embodiment, the cured composite composition exhibits a glass transition temperature (Tg) which is greater than about 85 °C. In another embodiment, the cured composite composition has a glass transition temperature in a range from about 100 °C to about 250 °C.

The cured composite compositions provided by the present invention are in certain embodiments especially resistant to crack formation. In one embodiment, the composite composition has a microcrack density less than about 2 microcracks per cm² on the cross-section of a standard test coupon after 2000 cycles of the thermal-humidity test in a range from 54 °C to 70 °C. In another embodiment, each microcrack observed in test coupons cut through at 0°, 90° and 45° following the test protocol is less than 800 µm long.

The cured composite compositions provided by the present invention exhibit excellent toughness. For example, the cured composite compositions exhibit a Glc resin toughness a range from about 1.2 in-lb/in² to about 8 in-lb/in² as measured using ASTM D 5045. In another embodiment, the cured composite compositions exhibit a G1c resin toughness a range from about 1.6 in-lb/in² to about 2.5 in-lb/in² as measured using ASTM D 5045. In another embodiment, the cured composite compositions exhibit a Glc resin toughness a range from about 0.8 psi-in^{1/2} to about 1 psi-in^{1/2} as determined by ASTM D 5045.

As will be appreciated by those of ordinary skill in the art, the cured composite compositions provided by the present invention will be widely applicable in the manufacture of articles requiring the outstanding performance properties as disclosed herein. In various embodiments, articles comprising the cured composite composition of the present invention are expected to be especially useful in aviation and aerospace applications requiring a combination of high strength and light weight. Thus, it is anticipated that the cured composite compositions of the present invention will be useful in the manufacture of strong lightweight parts for aircraft, for example wings, fuselages, aircraft engine turbine blades, and the like. Other promising applications for the cured composite composition provided by the present invention include load bearing structures in spacecraft, load bearing structures in automobiles, construction materials such as beams and roofing materials, personal communication devices such as cell phones, furniture such as tables and chairs, sporting goods such as tennis racquets and golf clubs, seating for sports facilities, load bearing structures in train carriages and locomotives, load bearing structures in personal watercraft, sail boats, and ships, and non-load bearing structures requiring a combination of high strength and light weight in any of the forgoing applications.

### EXAMPLES

The following examples illustrate methods and embodiments in accordance with the invention. Unless specified otherwise, all ingredients may be commercially available from such common chemical suppliers as Alpha Aesar, Inc. (Ward Hill, Massachusetts), Sigma Aldrich (St. Louis, Missouri), Spectrum Chemical Mfg. Corp. (Gardena, California), and the like.

### Method 1 Preparation of Formulation Comprising an Uncured Epoxy Resin and a Thermoplastic Block Copolymer (5% M22 in RTM6)

Warm RTM6 epoxy resin (285 g, from Hexcel, Dublin, CA) was charged to a 1 L flat-bottom flask equipped with a mechanical stirrer. M22 resin powder (15 g, block copolymer of PMMA-PBA-PMMA) was added to RTM6 resin with stirring. The flask was heated to 80°C and gently stirred (50 - 100 rpm). Full vacuum (∼30 in-Hg) was then applied to the flask and the resin started to foam. After the foaming subsided the stirring rate was increased to 200 rpm for 0.5 hr. The formulation was then stirred at 600 - 700 rpm for an additional 2.5 hrs. A single-phase transparent yellow-light brown uncured formulation was obtained.

### Preparation of Cured Composite Composition by Vacuum Assisted Resin Transfer Molding (VARTM) Process (Comparative Examples 1- 6)

An aluminum base plate having dimensions of about 76cm x 76cm and a glass top plate having dimensions 35cm x 35cm (1/4 inch thick) were cleaned and coated with FREKOTE mold release agent (from Henkel Loctite, BayPoint, CA). A layer of nylon porous mesh 35cm x 40cm (a standard resin flow medium available from Delstar Technologies Inc., Middletown, DE) was placed in the middle of the FREKOTE treated base plate and a layer of porous TEFLON release cloth 35cm x 35cm (from Richmond Aircraft Products, Inc., Norwalk, CA) was placed on top of the porous nylon mesh layer such that approximately 2.5 cm of the porous nylon mesh layer extended beyond two edges of the TEFLON release cloth layer. Carbon fabric layers (15 layers of T300 3k plain weave carbon fabric from Hexcel, Dublin, CA), having dimensions 35cm x 35cm, were positioned on top of the TEFLON release cloth layer. Porous inlet and exit tubes approximately 35cm in length were positioned along two edges of the stack and in contact with the 2.5 cm of the porous nylon mesh layer extending beyond the two edges of the TEFLON release cloth layer, the porous inlet tube being placed in contact with the first exposed strip of porous nylon mesh and the porous outlet tube being placed in contact with the second exposed strip of porous nylon mesh on the opposite edge of the stack. A strip of porous TEFLON release cloth approximately 5cm wide designed to serve as a conduit for excess resin was placed on the top layer of carbon fabric and extended to the edge of the stack in contact with the porous outlet tube. The glass top plate was placed on the top of the stack. Tacky, double-sided tape was placed on the surface of the base plate around the perimeter of the stack. A non-porous resin inlet tube linked to a resin reservoir and a non-porous outlet tube linked to a vacuum source and a receiver for excess resin were inserted into porous inlet tube and porous tube respectively. The assembly on the surface of the base plate was then enclosed with nylon vacuum bag film in a manner sufficient to attain a vacuum level of about 14.7 psi (full vacuum). As an optional step, a second layer of vacuum bag film could be applied if the first layer of vacuum bag film proved to be insufficient to achieve a full vacuum. The assembly was heated to about 90°C while being subjected to an applied vacuum. About 600 g of RTM 6 resin (from Hexcel, Dublin, CA) was heated to 90°C and degassed under vacuum. The resin container was then returned to atmospheric pressure and the resin infusion into the fiber structure was started. Resin flow was monitored during the infusion process which required about 30 minutes at the end of which time the resin was observed on the vacuum outlet to eliminate the air voids in the panel. Both inlet and outlet tubes were pinched off using Stapla tube sealer in order to maintain the high level of vacuum in the assembly. The resin-filled assembly was cured at 350°F for 2-3 hours under vacuum to provide a void-free panel comprising the cured composite composition.

### Preparation of Cured Composite Composition by Vacuum Assisted Resin Transfer Molding (VARTM) Process (Examples 1 - 3)

A carbon fiber assembly essentially identical to that described for Comparative Examples 1-6 (15 layers of T300 3k plain weave carbon fabric having dimensions 35 cm by 35 cm) was sealed in a nylon vacuum bag film enclosure comprising a resin inlet and outlet. An uncured formulation containing 5 percent by weight of the thermoplastic block copolymer M22 (PMMA-PBA-PMMA 5%) (Example 1) dissolved in the uncured epoxy resin RTM 6 resin was infused into the fiber structure under vacuum. The resin-filled assembly was cured under vacuum 350°F for 2-3 hours to provide a panel comprising the cured composite composition. Example 2 and Example 3 were carried out using the same procedure except that the uncured formulations employed were RTM6+5%E20 (Example 2) and RTM6+2.5%E20 (Example 3). E20 is a thermoplastic block copolymer of polystyrene (PS, 22k), polybutadiene (PB, 37k), and polymethylmethacrylate (PMMA, 21k) available from Arkema, Inc. (Philadelphia, PA) having an overall weight average molecular weight (M_{w}) of approximately 81.7k grams per mole and an overall number average molecular weight (Mₙ) of approximately 50.9k grams per mole.

### Preparation of Cured Composite Composition by Resin Film Infusion (RFI) Process (Comparative Examples 7-9)

A 15 layer carbon fiber assembly as in Comparative Examples 1-6 was laid up on an aluminum plate. About 270 grams of Cycom 977-2 resin film (from Cytec Engineered Materials Inc., Tempe, Arizona ) was placed on the carbon fabric. A clean, FREKOTE treated caul plate was then placed on top of the resin film. A breather material (from Richmond Aircraft Products, Inc., Norwalk, CA)) was applied to cover the caul sheet, and surround the carbon fabric layer. The assembly was then enclosed in a vacuum bag film enclosure equipped with vacuum line. The breather material extended to vacuum line. The assembly was then placed in an autoclave and a vacuum line was secured. Thermocouples were placed on the top and bottom of the assembly. The autoclave was operated at a pressure of about 85 psi during the infusion process. Curing at 350°F for 2-3 hours afforded a panel comprising a cured composite composition.

The following testing procedures were used. Tensile Modulus and Tensile strength were measured using ASTM D 3039 method at room temperature, using a crosshead rate of 0.2 inch per minute until the sample breaks. The toughness properties such as the K1c (critical-stress-intensity factor) and G1c (critical strain energy release rate) were determined in accordance to ASTM method D5045. Microcracks were studied using an optical microscopy and internally developed automated image analysis software. Processing Viscosity was measured using a Brookfield Viscometer with a Thermosel Temperature Control Unit.

**Table 1: Processing Viscosity Values And Critical Strain Energy Release Rate For The Product Cured Composite Compositions**

| Sample* | | Processing Viscosity | G1c | Std. Deviation |
|---|---|---|---|---|
| Example 1 | RTM-6+5%M22 | 280 | 2.98 | 0.46 |
| Example 2 | RTM6 + 5% E20 | 520 | 2.72 | 0.32 |
| Comparative Example1 | RTM6 | 80 | 0.93 | 0.19 |
| Comparative Example2 | 5250-4 RTM | 220 | 0.77 | 0.09 |
| Comparative Example3 | LX70412.0 VARTM | 60 | 1.55 | 0.42 |
| Comparative Example4 | VRM34 | 600 | 0.27 | 0.12 |
| Comparative Example5 | Daron XP45/40B | 860 | 0.54 | 0.08 |
| Comparative Example6 | 977-20 | 40 | 0.87 | 0.2 |
| Comparative Example7 | 5208 | 1140 | 1.2 | 0.38 |
| Comparative Example8 | 977-2 | 3920 | 2.36 | 0.18 |
| Comparative Example9 | PR520 | 1700 | 6.6 | 0.5 |

| | | | | |
|---|---|---|---|---|
| * 5250-4 RTM is a Bismaleimide resin from Cytec; LX70412.0 is a benoxazine from Henkel-Loctite; VRM34 is an epoxy resin from Hexcel (HEXFLOW VRM 34); Daron XP-45/40B is a methacrylate resin; 977-20 is an epoxy resin from Cytec; 5208 is an epoxy resin from Cytec; 977-2 is a toughened epoxy from Cytec; PR520 is a toughened epoxy resin from Cytec (CYCOM PR520) | | | | |

The data in Table 1 show that the uncured formulations used to prepare the cured composite compositions of the invention have low viscosity and that the corresponding cured composite composition products exhibit high critical strain energy release rate value relative to the Comparative Examples. The high critical strain energy release rate value indicates that the cured composite compositions of Examples 1 and 2 exhibit high resin toughness while maintaining the low processing viscosity required for the VARTM process.

**Table 2: Microcrack Number After 2000 Cycles Along With Glass Transition Temperature And Viscosity**

| | Microcrack # (2000 cycles) | Viscosity (centiPoise) | Tg (°C) |
|---|---|---|---|
| Example 1 | 4 | 280 | 189.8 |
| Example 3 | 18 | 200 | 194.2 |
| Comparative Example 1 | 148 | 80 | 194.4 |
| Comparative Example 3 | 60 | 60 | 174 |
| Comparative Example 4 | 120 | 600 | 148.1 |
| Comparative Example 6 | 45 | 40 | 196.4 |
| Comparative Example 8 | 2 | 3920 | 156.7 |

Referring to Table 2, the data illustrate the special suitability of the uncured formulations of Examples 1 and 3 in the preparation of the cured composite compositions of the invention (Examples1 and 3) by the VARTM process. The uncured formulations of Examples 1 and 3 display a combination of properties especially well suited to the preparation of cured composite compositions since they exhibit low viscosity in the uncured state, and both a high Tg and a high level of crack resistance when incorporated into the cured composite compositions of the present invention. The data provided by the Comparative Examples illustrate the limitations of known formulations and cured composite compositions prepared from them. Thus, the uncured formulations have either a low viscosity but produce cured composite compositions exhibiting poor microcrack resistance (Comparative Examples 1, 3, 4, and 6), or exhibit good microcrack resistance but exhibit an excessively high initial viscosity (Comparative Example 8).

**Table 3: Total Crack Number and Length**

| | Total Crack Number | | | | | Total Crack Length (micrometer) | | | | |
|---|---|---|---|---|---|---|---|---|---|---|
| Cycles | 400 | 800 | 1200 | 1600 | 2000 | 400 | 800 | 1200 | 1600 | 2000 |
| Ex.1 | 0 | 2 | 0 | 0 | 2 | 0 | 521.755 | 0 | 0 | 414.162 |
| Ex.3 | 0 | 5 | 1 | 1 | 9 | 0 | 1531.215 | 336.616 | 258.141 | 2630.169 |
| CEx.1 | 0 | 11 | 35 | 45 | 141 | 0 | 4840.524 | 12311.47 | 15997.48 | 53058.92 |
| CEx.3 | 3 | 10 | 31 | 25 | 60 | 1228.643 | 3213.594 | 7256.907 | 10018.77 | 21895.1 |
| CEx.6 | 19 | 36 | 49 | 26 | 45 | 5789.606 | 12149.16 | 13807.64 | 10704.18 | 13605.38 |
| CEx.8 | 0 | 0 | 4 | 0 | 3 | 0 | 0 | 664.745 | 0 | 770.593 |

**Table 4: Normalized Performance Data for Comparative Example 1 and Example 1**

| | CEx.1 | Std Deviation | Ex.1 | Std Deviation |
|---|---|---|---|---|
| Compressive Strength | 1 | 0.0553 | 0.9368 | 0.0427 |
| Ply Thickness | 1 | 0 | 1 | 0 |
| Tensile Strength | 1 | 0.0833 | 0.9750 | 0.0333 |
| Tensile Modulus | 1 | 0 | 1.0488 | 0.0732 |
| K1c | 1 | 0.0870 | 1.7391 | 0.0652 |
| Glc | 1 | 0.0430 | 2.9836 | 0.4590 |
| Viscosity | 1 | 0 | 1.3762 | 0 |

The data presented in Table 4, indicate that the cured composite compositions of the present invention as exemplified by Example 1, exhibit high resin toughness and yet are derived from low viscosity uncured formulations which readily adaptable for use in the VARTM process. In addition, the cured composite compositions of the present invention as illustrated by Example 1 show comparable compression strength relative to known materials as illustrated by Comparative Example 1.

The foregoing examples are merely illustrative, serving to exemplify only some of the features of the invention. The appended claims are intended to claim the invention as broadly as it has been conceived and the examples herein presented are illustrative of selected embodiments from a manifold of all possible embodiments. Accordingly, it is the Applicants' intention that the appended claims are not to be limited by the choice of examples utilized to illustrate features of the present invention. As used in the claims, the word "comprises" and its grammatical variants logically also subtend and include phrases of varying and differing extent such as for example, but not limited thereto, "consisting essentially of" and "consisting of." Where necessary, ranges have been supplied; those ranges are inclusive of all sub-ranges there between. It is to be expected that variations in these ranges will suggest themselves to a practitioner having ordinary skill in the art and where not already dedicated to the public, those variations should where possible be construed to be covered by the appended claims. It is also anticipated that advances in science and technology will make equivalents and substitutions possible that are not now contemplated by reason of the imprecision of language and these variations should also be construed where possible to be covered by the appended claims.

## Claims

1. A cured composite composition comprising:
(a) a fiber component; and
(b) an organic composition comprising a cured epoxy continuous phase and a nanoparticulate thermoplastic block copolymeric discontinuous phase;
said nanoparticulate thermoplastic block copolymeric discontinuous phase having a domain size distribution in a range from about 1 nanometer to about 500 nanometers,
said discontinuous phase being substantially uniformly distributed throughout the cured composite composition.

2. The cured composite composition according to claim 1, comprising structural units derived from a formulation comprising an uncured epoxy resin and a thermoplastic block copolymer, said thermoplastic block copolymer being substantially soluble in said uncured epoxy resin and substantially insoluble in a corresponding cured epoxy resin.

3. The cured composite composition according to claim 2, wherein said formulation has a viscosity in a range from about 20 centiPoise to about 1200 centiPoise at the infusion temperature.

4. The cured composite composition according to claim 2 claim 3, wherein said formulation is **characterized by** a concentration of uncured epoxy resin in a range from about 60 weight percent to about 98 weight percent based upon a total weight of the composition, and said formulation is **characterized by** a concentration of thermoplastic block copolymer in a range from about 2 weight percent to about 40 weight percent based upon a total weight of the composition.

5. A method of preparing a cured composite article comprising:
(a) contacting a fiber structure with a formulation comprising an uncured epoxy resin and a thermoplastic block copolymer, said thermoplastic block copolymer being substantially soluble in said uncured epoxy resin and substantially insoluble in a corresponding cured epoxy resin to provide an uncured intermediate,
said contacting being carried out under vacuum assisted resin transfer method conditions; and
(b) curing the uncured intermediate to provide a cured composite article comprising a cured epoxy continuous phase and a nanoparticulate thermoplastic block copolymeric discontinuous phase;
said nanoparticulate thermoplastic block copolymeric discontinuous phase having a domain size distribution in a range from about 1 nanometer to about 500 nanometers,
said discontinuous phase being substantially uniformly distributed throughout the cured composite composition.

6. The method according to claim 5, wherein said nanoparticulate thermoplastic block copolymeric discontinuous phase comprises a thermoplastic diblock copolymer or a thermoplastic triblock copolymer.

7. The method according to claim 6, wherein said thermoplastic diblock copolymer comprises polymethylmethacrylate blocks and a polybutylarcylate block.

8. The method according to claim 6, wherein said thermoplastic triblock copolymer comprises a polystyrene block, a polybutylacrylate block, and a-polymethylmethacrylate block.

9. An uncured composite composition comprising:
(a) a fiber component; and
(b) a formulation comprising an uncured epoxy resin and a thermoplastic block copolymer selected from the group consisting of diblock copolymers of polymethylmethacrylate and polybutylacrylate, and triblock copolymers of polystyrene, polybutylacrylate, and polymethylmethacrylate;
wherein said thermoplastic block copolymer is substantially soluble in said uncured epoxy resin and substantially insoluble in a corresponding cured epoxy resin.

10. The uncured composite composition according to claim 9, wherein said formulation has a viscosity in a range from about 20 centiPoise to about 1200 centiPoise at ambient temperature.

11. The composition according to claim 9 or claim 10, wherein said formulation is **characterized by** a concentration of uncured epoxy resin in a range from about 60 percent by weight to about 98 percent based upon a total weight of the formulation, and said formulation is **characterized by** a concentration of thermoplastic block copolymer in a range from about 2 percent by to about 40 percent by weight based upon a total weight of the formulation.

12. A cured composite composition comprising:
(a) a carbon fiber component; and
(b) an organic composition comprising a cured epoxy continuous phase and a nanoparticulate thermoplastic diblock copolymeric discontinuous phase;
said nanoparticulate thermoplastic diblock copolymeric discontinuous phase having a domain size distribution in a range from about 1 nanometer to about 500 nanometers,
said discontinuous phase being substantially uniformly distributed throughout the cured composite composition.

13. The cured composite composition according to claim 12, comprising structural units derived from a formulation comprising an uncured epoxy resin and a thermoplastic diblock copolymer, said thermoplastic diblock copolymer being substantially soluble in said uncured epoxy resin and substantially insoluble in a corresponding cured epoxy resin.

14. The cured composite composition according to claim 13, wherein said formulation has a viscosity in a range from about 20 centiPoise to about 1200 centiPoise at the infusion temperature.

15. The cured composite composition according to claim 13 or claim 14, wherein said formulation is **characterized by** a concentration of uncured epoxy resin in a range from about 60 percent by weight to about 98 percent by weight based upon a total weight of the composition, and said formulation is **characterized by** a concentration of thermoplastic diblock copolymer in a range from about 2 percent by weight to about 40 percent by weight based upon a total weight of the composition.
